# EUROPÄISCHE PATENTANMELDUNG

(11) **EP 2 223 597 A1**
(43) Veröffentlichungstag der Anmeldung: **01.09.2010**
(21) Anmeldenummer: 10155358.4
(22) Anmeldetag: 02.07.2004
(51) Int. Cl.: A01N 43/12

(54) **Verwendung von 2,2-Dimethyl-3-(2,4-dichlorophenyl)-2-oxo-1-oxaspiro[4.5]dec-3-en-4-yl butanoat zur Bekämpfung von Akariden**

(62) Teilanmeldung aus: 04740580.8
(71) Anmelder: Bayer CropScience AG, 40789 Monheim (DE)
(72) Erfinder: Fischer, Reiner, Dr., 40789 Monheim (DE); Brueck, Ernst, Dr., 53343 Wachtberg-Villip (DE)

(57) **Zusammenfassung**

Die vorliegende Erfindung betrifft die Verwendung von 2,2-Dimethyl-3-(2,4-dichlorophenyl)-2-oxo-1-oxaspiro[4.5]dec-3-en-4-yl butanoat zur Bekämpfung von Akariden in Hopfen, Kiwi, Beerenfrüchten, Nüssen, Kaffee, tropischen Früchten, Gewürzen und Coniferen.

## Beschreibung

Die vorliegende Erfindung betrifft die Verwendung von 2,2-Dimethyl-3-(2,4-dichlorophenyl)-2-oxo-1-oxaspiro[4.5]dec-3-en-4-yl butanoat zur Bekämpfung von Akariden in Hopfen, Kiwi, Beerenfrüchten, Nüssen, Kaffee, tropischen Früchten, Gewürzen und Coniferen.

Die Verbindung 2,2-Dimethyl-3-(2,4-dichlorophenyl)-2-oxo-1-oxaspiro[4.5]dec-3-en-4-yl butanoat ist aus EP-A-528 156 bekannt.

Ferner ist aus EP-A-528 156 bekannt, dass 2,2-Dimethyl-3-(2,4-dichlorophenyl)-2-oxo-1-oxaspiro-[4.5]dec-3-en-4-yl butanoat akarizid wirksam ist.

Überraschenderweise wurde jetzt gefunden, dass 2,2-Dimethyl-3-(2,4-dichlorophenyl)-2-oxo-1-oxaspiro[4.5]dec-3-en-4-yl butanoat besonders gut zur Bekämpfung von Akariden in Hopfen, Kiwi, Beerenfrüchten, Nüssen, Kaffee, tropischen Früchten, Gewürzen und Coniferen geeignet ist.

Die vorliegende Erfindung betrifft demnach die Verwendung von 2,2-Dimethyl-3-(2,4-dichlorophenyl)-2-oxo-1-oxaspiro[4.5]dec-3-en-4-yl butanoat zur Bekämpfung von Akariden in Hopfen, Kiwi, Beerenfrüchten, Nüssen, Kaffee, tropischen Früchten, Gewürzen und Coniferen.

2,2-Dimethyl-3-(2,4-dichlorophenyl)-2-oxo-1-oxaspiro[4.5]dec-3-en-4-yl butanoat besitzt die folgende Formel (I):

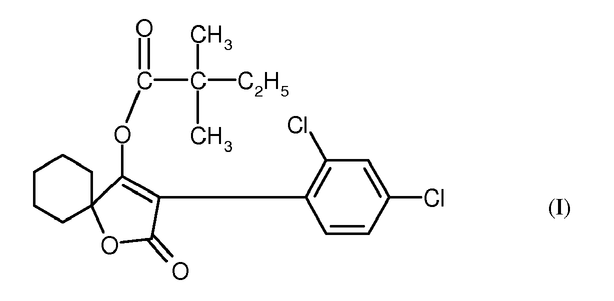

Die Herstellung der Verbindung der Formel (I) ist in EP-A-1 272 480 beschrieben.

Die Verbindung der Formel (I) kann bevorzugt für die Bekämpfung von Arthropoden aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp. und Brevipalpus spp. eingesetzt werden. Besonders bevorzugt erfolgt die Bekämpfung von Panonychus spp. und Tetranychus spp.

Die Verbindung der Formel (I) kann bevorzugt in Hopfen; Kiwi; Beerenfrüchten wie beispielsweise Johannisbeere, Stachelbeere, Himbeere, Brombeere, Erdbeere, Heidelbeere; Nüssen wie beispielsweise Mandeln, Pistazien, Buchen, Cashewnüssen, Haselnüsse, Paranüsse, Butternüsse, Kastanie, Hickorynüsse, Macadamianüsse, Pecannüsse, Kokosnüsse, Walnüsse; tropische Früchte wie beispielsweise Mango, Papaya, Datteln; Kaffee und Gewürze wie beispielsweise Cili; und Coniferen wie beispielsweise Fichten und Tannen eingesetzt werden.

Diese Pflanzen können durch konventionelle Züchtungs- und Optimierungsmethoden oder durch biotechnologische und gentechnologische Methoden oder Kombinationen dieser Methoden erhalten werden, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Der Wirkstoff der Verbindung der Formel (I) kann in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

### Anwendungsbeispiele

### Beispiel A

Schädling: Tetranychus urticae
Kultur: Hopfen

Die Verbindung der Formel (I) (240SC) wurde mit 0.0048 % a.i. geprüft im Vergleich zu Cis-Cyhalothrin (050EC) mit 0.005 % a.i.. Die Anwendung der Verbindung der Formel (I) erfolgte bei beginnendem Schädlingsbefall, die von Cis-Cyhalothrin bei bereits starkem Befall.

Die Spritzbrühe (2000 l/ha) wurde mit einem Pressluft getriebenem Rückengerät ausgebracht.

Die Parzellengröße betrug 6 Pflanzen, die Anzahl Wiederholungen pro Versuchsvariante war 2.

Die Spinnmilbenwirkung wurde bestimmt 4, 14 und 21 Tage (Verbindung der Formel (I)) bzw. 4, 11 und 18 Tage (Cis-Cyhalothrin) nach der Behandlung durch Zählen der lebenden Tiere/Blatt (10 Blätter/Parzelle) und Berechnung des Wirkungsgrades nach Abbott.

**Tabelle A**

| Tetranychus urticae / Hopfen | | | | | | |
|---|---|---|---|---|---|---|
| **Wirkstoffe** | **Konzentration** **% a.i./ha** | **Wirkungsgrad % Abbott** | | | | |
| | | 4* | 11* | 14* | 18* | 21* |
| Verbindung der Formel (I) (240 SC) | 0.0048 | 90 | | 94 | | 93 |
| Cis-Cyhalothrin (050 EC) | 0.005 | 59 | 57 | | 0 | |

| | | | | | | |
|---|---|---|---|---|---|---|
| * Tage nach Behandlung | | | | | | |

### Beispiel B

- Schädling:: Tetranycus urticae
- Kultur:: Hopfen

Verbindung der Formel (I) (240 SC) wurde mit 0.0144 % a.i. geprüft im Vergleich zum Standard Amitraz (200 EC) mit 0.05 % a.i.. Es erfolgte 1 Spritzung.

Die Spritzbrühe (2200 1/ha) wurde mit einem Traktor getriebenen Anhängegerät ausgebracht. Die Parzellengröße betrug 60 Pflanzen und es wurde mit 2 Wiederholungen pro Versuchsvariante gearbeitet.

Die Spinnmilbenwirkung wurde bestimmt 5, 12, 19 und 34 Tage nach der Behandlung durch Zählen der lebenden Tiere/Blatt (60 Blätter/Parzelle) und Berechnung des Wirkungsgrades nach Abbott.

**Tabelle B**

| Tetranychus urticae / Hopfen | | | | |
|---|---|---|---|---|
| **Wirkstoffe** | **Konzentration** **% a.i./ha** | **Wirkungsgrad % Abbott** | | |
| | | 5* | 12* | 19* |
| Verbindung der Formel (I) (240 SC) | 0.0144 | 89.7 | 98.1 | 99.6 |
| Amitraz (200 EC) | 0.05 | 80.1 | 96.3 | 92.2 |

| | | | | |
|---|---|---|---|---|
| * Tage nach Behandlung | | | | |

### Beispiel C

- Schädling:: Tetranychus urticae
- Pflanze :: Schwarzer Walnussbaum

Die Verbindung der Formel (I) (240 SC) wurde bei einer Konzentration von 2,02 Unzen a.i. pro 100 Gallonen (= 0,126 Pfund a.i. pro Morgen) im Vergleich zu PYRAMAT (Pyridaben, 75 WP) bei einer Auftragsrate von 0,125 Pfund a.i. pro Morgen getestet.

Die Sprühlösung (100 Gallonen pro Morgen) wurde mittels eines motorgetriebenen Handsprühgerätes ausgetragen.

Der Versuch wurde mit einem Baum pro Parzelle und drei Wiederholungsversuchen durchgeführt.

Die Wirksamkeit gegen Spinnmilben wurde durch Zählen der lebenden Eier und Nymphen auf acht Blättern pro Baum vor und eine, zwei und sechs Wochen nach Anwendung und anschließend gemäß der Henderson & Tilton-Formel berechnet.

| **Verbindung** | **Auftragsrate Pfund a.i.pro Morgen** | **Wirksamkeit in Henderson&Tilton-% auf EIERN** | | |
|---|---|---|---|---|
| | | **1 WNA** | **2 WNA** | **6 WNA** |
| Verbindung der Formel (I) (240 SC) | 0,126 | 100 | 100 | 64 |
| PYRAMITE (75 WP) | 0,125 | 93 | 73 | 0 |

| **Verbindung** | **Auftragsrate Pfund a.i. pro Morgen** | **Wirksamkeit in Henderson&Tilton-% auf NYMPHEN** | | |
|---|---|---|---|---|
| | | **1 WNA** | **2 WNA** | **6 WNA** |
| Verbindung der Formel (I) (240 SC) | 0,126 | 100 | 100 | 83 |
| PYRAMITE (75 WP) | 0,125 | 99 | 94 | 79 |

### Beispiel D

- Schädling:: Eotetranychus hicoriae
- Pflanze :: Pekannussbaum

Die Verbindung der Formel (I) (240 SC) wurde bei einer Auftragsrate von 0,313 lb a.i. pro Morgen im Vergleich zu ACRAMIT (Bifenazat, 50 WP) bei 0,50 Pfund a.i. pro Morgen getestet.

Die Sprühlösung (105 Gallonen pro Morgen) wurde mittels eines motorgetriebenen Handsprühgerätes ausgetragen.

Der Versuch wurde mit einem Baum pro Parzelle und vier Wiederholungsversuchen durchgeführt.

Die Wirksamkeit gegen die Pekanblattbräunemilbe wurde durch Zählen der Anzahl lebender Milben auf fünf Blättern pro Baum 6 und 13 Tage nach Anwendung ermittelt und anschließend mit Hilfe der Abbott-Formel berechnet.

| **Verbindung** | **Auftragsrate Pfund a.i. pro Morgen** | **Wirksamkeit in Abbot-%** | |
|---|---|---|---|
| | | **6 TNA** | **13 TNA** |
| Verbindung der Formel (I) (240 SC) | 0,313 | 100 | 80 |
| ACRAMITE (50 WP) | 0,5 | 86 | 20 |

## Patentansprüche

1. Verwendung der Verbindung der Formel (I) 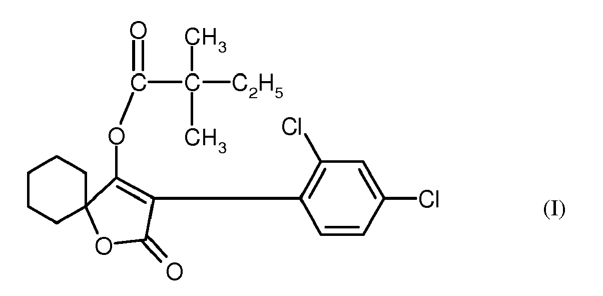 zur Bekämpfung von Akariden in Coniferen.
